# EUROPÄISCHE PATENTANMELDUNG

(11) **EP 1 626 293 A2**
(43) Veröffentlichungstag der Anmeldung: **15.02.2006**
(21) Anmeldenummer: 05450134.1
(22) Anmeldetag: 08.08.2005
(51) Int. Cl.: G01V 3/15

(54) **Metall-, insbesondere Minensuchgerät**

(30) Priorität: 13.08.2004 AT 13722004
(71) Anmelder: Schiebel Elektronische Geräte GmbH, 1050 Wien (AT)
(72) Erfinder: Kellermann, Gerd, 1020 Wien (AT)
(74) Vertreter: Wildhack, Helmut

(57) **Zusammenfassung**

Minensuchgerät mit einem Suchkopf mit Sendeeinheit für die Abstrahlung von Signalfolgen in den Boden und mit einer Metall-Detektionseinheit.

Erfindungsgemäß ist vorgesehen,
- dass am Suchkopf (2) ein Abstandsmess-Sensor (3) für die Ermittlung des aktuellen geometrischen Abstandes (abs) des Suchkopfes (2) vom Boden (B) angeordnet ist,
- dass der Antwortssignalsensor (22) und der Abstandsmesssensor (3) jeweils mit einer bei Veränderung des Abstandes (abs) zwischen Suchkopf (2) und Bodenoberfläche (ob), mit Bodenabstands-Messdaten belieferbaren Messdatenverknüpfungseinheit (4) zur Erstellung einer Abstands/Signalstärkekurve (40) datenflussverbunden sind,
- dass die Messdatenverknüpfungseinheit (4) mit einer Kurvenkomparationseinheit (5) datenaustauschverbunden ist, welche ihrerseits mit einer Standardkurven- bzw. Algorithmen-Speichereinheit (6) datenaustauschverbunden und von derselben mit den Standardabstands/Signalstärkekurven bzw. -algorithmen belieferbar ist und
- dass von der Kurvenkomparationseinheit (5) aus die - der aus der Standardkurven-Speichereinheit (6) ausgewählten Signalstärkekurve zugeordneten - Parameter-Informationen (pi) über eine Kategorisiereinheit (7) an eine Anzeigeeinheit (8) am Minensuchgerät (1) abgebbar sind (Fig. 1).

## Beschreibung

Die vorliegende Erfindung betrifft ein neues, bevorzugter Weise tragbares Metall-, insbesondere Minensuchgerät für die Auffindung und Ortung von sich unter der Oberfläche eines Bodens, Untergrundes od. dgl. befindlichen Metallobjekten, insbesondere von zumindest einen Metallbauteil aufweisenden, dort vergrabenen Minen, mit Suchkopf mit Sendeeinheit für die Abstrahlung von elektrischen und/oder magnetischen Signalen bzw. Signalfolgen in den Boden, Untergrund od. dgl. und einer Metall-Detektionseinheit, welche eine Empfangseinheit für die Antwort-Signale bzw. -Signalfolgen mit mindestens einem Antwort-Signalstärke-Sensor und eine Einrichtung zur Angabe bzw. Anzeige des Vorhandenseins eines Metallobjektes, insbesondere einer Mine im Boden, Untergrund od. dgl. umfasst.

Als eines der wirksamsten und effektivsten Sperrwaffensysteme gegen Landstreitkräfte sind seit langem die klassischen Landminen bei Militäreinsätzen in Gebrauch. Die Minen können von Hand aus oder mechanisch verlegt werden. So werden z.B. beim mechanischen Verlegen die Minenkörper bis zu 50 cm tief in den Boden bzw. Untergrund vergraben und sind somit für den Infanteristen, aber auch für die Zivilbevölkerung nicht sichtbar. Daher stellt insbesondere nach Ende von bewaffneten Auseinandersetzungen die Entminung großer Flächen eine wesentliche Aufgabe für die Kriegsfolgenbeseitigung dar, welche bedauerlicher Weise nicht nur personalintensiv und zeitaufwändig, sondern auch mit großen Gefahren für das Entminungspersonal verbunden ist.

Neben dem Aufsuchen von Minen ist auch immer wieder das Aufspüren bzw. die Ortung von metallischen Gegenständen im Boden gefragt, es sei hier nur z.B. auf die Archäologie verwiesen.

Was die Funktion von Metallsuchgeräten betrifft, so ist dazu nur kurz auszuführen, dass jeder Metallgegenstand, der mit einem Metallsuchgerät aufgespürt werden kann, das von dessen Signal-Sendeeinheit, z.B. Suchspule, aufgebaute elektromagnetische Feld verzerrt, und dass mittels dieser Verzerrung bei den bis heute üblichen Suchgeräten immer noch überwiegend mittels akustischen Signals die Metall-, insbesondere Minenfundstelle angezeigt wird.

Im Wesentlichen wird bei der üblichen Minensuche so vorgegangen, dass der Operator den Suchkopf des Gerätes in möglichst geringem Abstand vom Untergrund oberhalb des zu ortenden Objekts etwa mit einer Geschwindigkeit von etwa 0,5 m/sec etwa horizontal hin und her schwingt. Dabei ertönt in dem Kopfhörer des Gerätes dann ein charakteristisches Signal, wenn der Suchkopf oberhalb eines Metallobjektes vorbeigezogen wird. Das akustische Signal ändert sich während des Bewegens des Suchkopfes in seiner Intensität und Frequenz und ermöglicht auf diese Weise eine ziemlich exakte Horizontal-Ortung der Mine, wobei aber zu betonen ist, dass bei dieser Art der Suche und akustischen Anzeige eine einigermaßen aussagekräftige Abschätzung bezüglich Tiefenlage und Größe des Metallobjektes nicht möglich ist.

Minensuchgeräte können beispielsweise nach dem Frequenzprinzip arbeiten, und in diesem Fall günstiger Weise in einem Frequenzbereich der elektromagnetischen Schwingungen von 1 bis 100 kHz. Dabei findet das Prinzip Anwendung, dass eine mit ihrem Magnetfeld gekoppelte Wechselspannung in dem im Boden befindlichen bzw. dort vergrabenen Metallobjekt, Wirbelströme generiert, die dann mittels der Empfangseinheit detektiert werden können. Die Unterschiede zwischen den handelsüblichen Geräte liegen beispielsweise in der Auswahl der von ihrer Sendeeinheit abgestrahlten Frequenzen. Bei Geräten, die nur mit einer Frequenz arbeiten, wird zur Detektion eines Metallobjekts üblicherweise die Phasenverschiebung und/oder die Dämpfung des abgestrahlten Ausgangssignals herangezogen. Es finden weiters auch Mehrfrequenz-Geräte Einsatz, bei welchen die Detektion unter Heranziehung der Real- und Imaginärteile bei einer Mehrzahl von Frequenzen erfolgt.

Unterschiedliche geologische Strukturen, wie z.B. magnetmineral-haltige Böden führen zu Beeinträchtigungen der Signalanzeige und die so gewonnenen Daten müssen entsprechend korrigiert bzw. kompensiert werden. Weiters sollen Metall- bzw. Minensuchgeräte der Forderung entsprechen, dass sie möglichst auf verschiedene Arten von Metallen und Formen metallischer Gegenstände ansprechen, da dieselben bzw. die in Minen verwendeten metallischen Komponenten eben mit qualitativ sehr unterschiedlichen und unterschiedlich geformten Metallanteilen gebildet sind, was zu irreführenden Anzeigen führt.

Es hat sich in Anbetracht der großen Variabilität der aufzusuchenden Metallobjekte, insbesondere der in Minen enthaltenen Metallanteile in der Praxis gezeigt, dass für eine tatsächlich effektive Ortung von Metallobjekten, insbesondere für eine tatsächlich effektive Räumung eines Minenfeldes, eine zumindest grobe Abschätzung von Tiefenlage und Größe sowie weiters eventuell Materialbeschaffenheit der Metallobjekte bzw. der Minen bzw. der in denselben enthaltenen metallischen Anteile eine ganz wesentliche und oft entscheidende Hilfe darstellen können.

Die Erfindung hat sich somit die Aufgabe gestellt, ein Metall-, insbesondere Minensuchgerät zu entwickeln, welches zum ersten Mal eine derartige Ab- bzw. Einschätzung von Tiefenlage und/oder Größe eines Metallobjektes ermöglicht.

Zur Lösung dieser Aufgabe wesentlich beigetragen hat die durch eine große Anzahl entsprechender Tests erhärtete Beobachtung, dass sich die Signalhöhe der von dem metallischen Objekt zurückgestrahlten veränderten, gedämpften elektromagnetischen Schwingungen in Abhängigkeit von der Größe des jeweils georteten Metallobjekts und von dessen jeweiliger Tiefenlage sowie von weiteren Faktoren, wie z.B. Art des Metalls, mit dem Abstand des Suchkopfes des Gerätes bzw. von dessen Suchspule von dem zu ortenden metallischen Objekt in charakteristischer Weise ändert.

Dementsprechend ist Gegenstand der Erfindung ein Metall-, insbesondere Minensuchgerät der eingangs im ersten Absatz dieser Beschreibung genannten Art, welches dadurch gekennzeichnet ist,
- dass - zur Abschätzung von Tiefenlage und Größe des Metallobjekts - am bzw. im, bevorzugt mit einer Sendeeinheit für die Abstrahlung von Signalen mit jeweils auf gewünschte Werte einstellbaren Frequenzen ausgestatteten, Suchkopf des Metallinsbesondere Minensuchgerätes zusätzlich zur Metall-Detektionseinheit mit dem Antworts-Signal-Sensor ein Abstandsmess-Sensor für die Ermittlung des jeweils aktuellen geometrischen Abstandes des Suchkopfes von der Oberfläche des - jeweils eine bestimmte Bodenbeschaffenheit aufweisenden - Bodens, Untergrundes od. dgl. angeordnet ist,
- dass der Antworts-Signal-Sensor und der Abstandsmess-Sensor jeweils mit einer - mit den Sätzen von - bei Veränderung des Abstandes zwischen dem Suchkopf und der Bodenoberfläche, insbesondere durch Anheben oder Absenken des Suchkopfes von bzw. zu derselben, vom Antwort-Signal-Sensor und vom Abstandsmess-Sensor jeweils aktuell ermittelten - Antwort-Signal-, insbesondere -Feldstärke- bzw. -Signalhöhe-Messdaten und Bodenabstands-Messdaten belieferbaren - Messdaten-Verknüpfungseinheit zur Erstellung einer bzw. eines jeweils - die Funktionalität zwischen Antwort-Signal und Suchkopf/Bodenabstand, bevorzugt in digitalisierter Form bzw. als Datenpaket, wiedergebenden - aktuellen Abstands/Signalstärkekurve bzw. - algorithmus datenflussverbunden sind,
- dass die Messdaten-Verknüpfungseinheit mit einer Kurven- bzw. Algorithmen-Komparationseinheitdatenfluss- bzw. -datenaustausch - verbunden ist, welche ihrerseits mit einer - eine Sammlung, Matrix bzw. Bibliothek mit einer Vielzahl von vorher mit einem Metall- bzw. Minensuchgerät gleicher Bauart unter einer Vielzahl von unterschiedlichen, jeweils bei vorgegebenen, Standard-Bedingungen bzw. - Parametern, wie insbesondere Tiefenlage, Größe bzw. Volumens- bzw. Flächenausdehnung, Form und Lage des Metallobjektes, Frequenz der von der Sendeeinheit abgestrahlten Signale sowie der Bodenbeschaffenheit ermittelten, bevorzugt in digitalisierter Form bzw. als Datenpaket dargestellten, Standard-Abstands/Signalstärkekurven bzw. -algorithmen zusammen mit den ihnen zugeordneten Informationen bezüglich der ebengenannten Parameter gespeichert enthaltenden - Standard-Kurven-bzw.-Algorithmen-Speichereinheit datenfluss- und datenaustausch-verbunden und von derselben mit den Standard-Abstands/Signalstärkenkurven bzw. -algorithmen mit den ihnen zugeordneten Parametern belieferbar und weiters mit einer Software für die Auswahl der bzw. des - der bzw. dem jeweils am aktuell georteten Metallobjekt aktuell ermittelten Abstands/Signalstärkekurve bzw. -algorithmus ähnlichsten - in der Standardkurven-Speichereinheit gespeicherten Standard-Abstands/Signalstärkekurve ausgestattet ist, und
- dass von der genannten Kurven-Komparationseinheit aus die - der bzw. dem ausgewählten, ähnlichsten Standard-Abstands/Signalstärkekurve bzw. -algorithmus zugeordneten - Parameter-Informationen, insbesondere bezüglich Größe und Tiefenlage des Metallobjekts über eine dieselbe in qualitative bzw. semiquantitative Objekts-Tiefenlage- und Objektsgröße-Daten umwandelnde Kategorisier-Einheit an eine, bevorzugt optische, zumindest die der Tiefenlage und die Größe des jeweils aktuell georteten Metallobjektes entsprechenden Werte in wenigen diskreten Messwert-Stufen angebende Anzeige-Einheit an einer für den Benutzer gut einsehbaren Stelle am Metall-, insbesondere Minensuchgerät abgebbar sind.

Das Wesen der vorliegenden Erfindung liegt darin, dass zum ersten Mal die Charakteristik der Veränderung der Antwort-Signale bzw. Signalhöhen am Detektor des Metallsuchgerätes mit dem Abstand des Suchkopfes vom Untergrund als Kriterium für die Abschätzung von Tiefenlage und Größe des Metallobjekts bzw. des Metallanteils einer Mine herangezogen wird.

Wesentlich bei dem neuen Metall- bzw. Minensuchgerät ist, dass es zwar in an sich bekannter Weise zur Ortung eines Metallobjektes z.B. in horizontaler oszillierender Schwenkbewegung über den es bergenden Untergrund geführt wird, dass aber z.B. nach Feststellung von dessen Position eine ganz gezielt herbeigeführte Änderung des Abstandes des Suchkopfes von der Boden-Oberfläche in senkrechter Richtung oberhalb des das geortete Metallobjekt bergenden Untergrunds wesentlich ist. Die im Verlauf der Änderung dieses "Höhenabstands" über der Bodenoberfläche ermittelte, im Wesentlichen die funktionelle Abhängigkeit der Signalhöhe gegenüber dem Abstand des Suchkopfes vom Boden wiedergebende charakteristische Verlaufskurve bzw. der derartige Algorithmus wird mit den in der im Gerät, z.B. in einem Speicher-Chip eingespeicherten Bibliothek od. dgl. von vorher mittels in verschiedenen definierten Tiefenlagen im Untergrund positionierten Metallobjekten verschiedener definierter Größe aufgenommenen Standard-Kurven bzw. -Algorithmen verglichen. Im optimalsten Fall wird z.B. nur eine bzw. ein einzige(r) Tiefenlage/Bodenabstands-Standardkurve bzw. - algorithmus in der Bibliothek gefunden, welche mit der bzw. dem soeben aktuell ermittelten derartigen Kurve bzw. Algorithmus praktisch identisch ist, und aufgrund der zusammen mit dieser bzw. diesem Standard-Kurve bzw. -Algorithmus gespeicherten - ihr bzw. ihm also zugeordneten - Angaben bzw. Parameter kann die Größe und die Tiefenlage des aktuell georteten metallischen Objektes am optischen Anzeigefeld des Metallsuchgerätes angezeigt werden.

In der Mehrzahl der Fälle ist es jedoch so, dass die bzw. der jeweils aktuell ermittelte Bodenabstands/Signalhöhen-Kurve bzw. -Algorithmus mehreren in der Bibliothek bzw. in der Speichereinheit gespeicherten, in ihrem Verlauf innerhalb einer gewissen Bandbreite ähnlichen Standard-Kurven bzw. -Algorithmen entspricht. In diesem Fall können mittels einer entsprechenden Software die den aufgefundenen Standard-Kurven bzw. -Algorithmen zugeordneten Parameter von Höhenlage und Größe des Metallobjekts nach Durchlaufen eines Datenreduktions-Programms od. dgl. in Form semiquantitativer Anzeigen bezüglich Tiefenlage und Metallobjektsgröße ausgegeben werden, welche beispielsweise etwa lauten: "tief und groß", "knapp unter der Oberfläche und groß", "mittlere Tiefenlage und mittlere Größe" u.dgl.

Gemäß einer ersten bevorzugten Ausführungsform der Erfindung, wie sie im Anspruch 2 geoffenbart ist, ist am bzw. im Metallsuchgerät eine von einem entsprechenden Softwarepaket unterstützte Eingabeeinheit für eine möglichst optimal auf das Metallobjekt abstimmbare Einstellung von dessen Sendefrequenz und/oder für die Einstellung der die aktuelle Bodenbeschaffenheit berücksichtigenden Parameter und/oder von Parametern, welche die Art des Metalls der Legierung des Metallobjektes berücksichtigten, vorgesehen.

Was den für das neue, semiquantitative Angaben bezüglich Tiefenlage und/oder Größe eines georteten Metallobjekts liefernde Metallsuchgerät wesentlichen Sensor für die Messung des während des Anhebens des Suchkopfes vom Untergrund oder beim Absenken desselben zum Untergrund hin laufend sich ändernden Abstandes des Suchkopfes von der Untergrund-Oberfläche betrifft, so gibt darüber der **Anspruch** 3 näher Auskunft.

Dem Anspruch 4 ist eine im Rahmen der für die Angabe der halbquantitativen Daten bezüglich Tiefenlage und Größe eines Metallobjekts vorteilhafte Ausführungsform der für deren Wiedergabe vorgesehenen optischen Anzeigeeinheiten am Metallsuchgerät zu entnehmen.

Es soll hier betont werden, dass die Anzeige natürlich keinesfalls auf eine optische Anzeige beschränkt sein muss, sie kann durchaus begleitet sein von der akustischen Anzeige, wie sie bei den meisten Minensuchgeräten ohnedies vorhanden ist, wie dem **Anspruch** 5 zu entnehmen. Es ist die oben genannte optische Anzeige keineswegs auf aufleuchtende Lämpchen, Leuchtdioden od. dgl. beschränkt, es kann auch eine Anzeige auf einem LCD- oder Plasma-Screen, z.B. in kurzer verbaler Form vorgesehen sein.

Die Erfindung umfasst als weiteren wesentlichen Gegenstand ein neues Verfahren zur Auffindung und Ortung von sich unterhalb der Oberfläche eines Bodens, Untergrundes od. dgl. befindlichen Metallobjekten, insbesondere von zumindest einen Metallbauteil aufweisenden, dort vergrabenen Minen, mit einem Metall-, insbesondere Minensuchgerät mit Suchkopf mit mindestens einer Sendeeinheit für die Abstrahlung von elektrischen und/oder magnetischen Signalen bzw. Signalfolgen in den Boden, Untergrund od. dgl. und einer Metall-Detektionseinheit, welche mindestens eine Empfangseinheit für die Antwort-Signale bzw. -Signalfolgen mit mindestens einem Feldstärke-Sensor und eine Einrichtung zur Angabe bzw. Anzeige des Vorhandenseins eines Metallobjektes, insbesondere einer Mine im Boden, Untergrund od. dgl., sowie zusätzlich einem Abstandsmess-Sensor umfasst.

Das Verfahren ist dadurch gekennzeichnet,
- dass in einer 1. Stufe - einer Reihe von verschiedenen diskreten Messbedingungs-Parametern (pi), entsprechend - in unterschiedlichen diskreten Tiefenlagen (tl) unterhalb der Boden-Oberfläche (ob) Metallobjekte (MO) diskreter unterschiedlicher Größe (go) Gestalt bzw. Form, Raumlage aus unterschiedlichen Metallen od. dgl. in Untergründen bzw. Böden (B) unterschiedlicher Beschaffenheit (bb) positioniert werden,
- dass in einer 2. Stufe mittels des Metallsuchgerätes (1) - jeweils nach Wahl und Einstellung eines der genannten Parameter (pi) sowie gegebenenfalls eines gerätespezifischen Parameters, insbesondere der Sendesignal-Frequenz des Gerätes (1), auf vorbestimmte diskrete unterschiedliche Werte - bei gleichzeitigem Konstanthalten aller übrigen Parameter - mittels des mit dem Bodenabstands-Messsensor (3) ausgestatteten Metallsuchgerätes (1) unter, bevorzugt kontinuierlicher, Veränderung des Abstandes (abs) von dessen Suchkopf (2) von der Boden-Oberfläche (bo), insbesondere durch Anheben des Suchkopfes (2) von derselben, mittels der Messdaten-Verknüpfungseinheit (4) des Metallsuchgerätes (1) eine Schar von für einen - bei Konstanthaltung aller übrigen Parameter - jeweils auf sich ändernde, diskrete Werte, eingestellten Parameter geltenden Standard-Abstands/Signalstärkekurven bzw. -Algorithmen (601, 602, ... 60X...60N) erstellt und in der Standardkurven- bzw. -algorithmen-Speichereinheit (6) abgelegt und gespeichert wird, und dieser Vorgang in analoger Weise unter entsprechendem Wechsel der jeweils diskret zu ändernden Parameter (pi) und der jeweils gleichzeitig konstant zu haltenden übrigen Parameter bis zum Erhalt einer Standard-Bodenabstands/Signalstärkenkurven- bzw. -algorithmen-Bibliothek od. dgl. fortgesetzt wird,
- dass in einer 3. Stufe mittels des gleichen Metallsuchgerätes (1) bzw. eines solchen gleicher Bauart nach Ortung eines hinsichtlich der obengenannten Parameter (pi), insbesondere Objektgröße (go) und Tiefenlage (tl), unbekannten Metallobjekts (MO) der Abstand (abs) des Suchkopfes (14) von der Boden-Oberfläche (BO), insbesondere durch Anheben desselben (14) von derselben, verändert wird und dass aus den aktuellen Bodenabstands- und Antwort-Signalstärke-Messdaten mittels der Messdaten-Verknüpfungseinheit (4) eine bzw. ein aktuelle(r) Abstands/Signalstärkekurve bzw. - algorithmus (40) erstellt wird, welche(r) in der Komparationseinheit (5) mit den aus der Standardkurven- bzw. -Algorithmen-Speichereinheit (6) abgerufenen Standard-Abstands/Signalstärkekurven bzw. -algorithmen (601, 602, ... 60X ... 60 N) verglichen wird, wobei die bzw. der - der bzw. dem jeweils aktuell ermittelten Abstands/Signalstärkekurve bzw. -algorithmus (40) in Koordinatenlage und Verlauf ähnlichste - Standard-Abstands/Signalstärkekurve bzw. -algorithmus (60X) ausgewählt wird und deren bzw. dessen Tiefenlage- und der Objektgrößen-Parameter über die Kategorisiereinheit (7) an die diese Parameter in wenige überschaubare Anzeigestufen übersetzende, vorzugsweise optische, Objektgrößen- und Tiefenlage-Anzeigeeinheit (8) weitergegeben werden, von wo dieselben
- in einer 4. Stufe von der das Metallsuchgerät bedienenden Person abgelesen werden, wonach und auf Grund der semiquantitativ angezeigten Objektgröße (go) und Tiefenlage (tl) schließlich das Metallobjekt (MO) geborgen wird.

Die mit dem Einsatz des neuen Metallsuchgerätes eng verknüpfte neue Methode zur semiquantitativen Abschätzung von Tiefenlage und Größe eines sich im Boden befindlichen Metallobjekts bedarf, wie aufgrund der obigen Angaben zu der ersten Stufe des Verfahrens zu erwarten, vorab einer großen Anzahl von Messungen bei - jeweils exakt definierten - unterschiedlichen Bedingungen und unter definierter Einstellung der unterschiedlichsten Parameter, auf Grund welcher die Erstellung von digitalisierten Standard-Bodenabstands/Signalhöhe-Kurven erfolgt, welche die verschiedenen Bedingungen und den Einfluss der sonstigen, die Signalhöhe beeinflussenden definierten Parameter außer Tiefenlage und Objektgröße, wie z.B. Bodenbeschaffenheit, Art des Metalls des Metallobjektes u. dgl. berücksichtigen, und dies jeweils für ein Gerät eines bestimmten Typs. Wenn einmal diese große Zahl von Bodenabstands/Signalhöhe-Kurven bzw. -Algorithmen aufgenommen und als "Bibliothek" od. dgl. in der Standardkurven- bzw. -algorithmen-Speichereinheit gespeichert ist, braucht diese Bibliothek, z.B. in Form eines entsprechenden Super-Chips, bloß in alle Geräte des jeweiligen Typs eingebaut werden, und diese Geräte sind dann für die Tiefenlage-Ortung und die Objektgrößen-Einschätzung praktisch ohne weitere Adaptionen voll einsatzfähig.

Soll auf einen von seiner Konfiguration und Charakteristik her anderen Typ von Metallsuchgerät übergegangen werden, kann die einmal erstellte Standardkurven- bzw. - algorithmen-Bibliothek der Speichereinheit durch eine die Standardkurven für den neuen Gerätetyp charakteristisch abänderndes Adaptions-Software in eine auf den neuen Gerätetyp zugeschnittene Standardkurven- bzw. -algorithmen-Bibliothek transponiert werden, so dass eine aufwendige Neuaufnahme aller Bodenabstands/Tiefenlage-Kurven bzw. -Algorithmen bei definiert zu variierenden Bedingungen für die Geräte des neuen Typs nicht mehr erforderlich ist.

Anhand der Zeichnung wird die Erfindung näher erläutert:

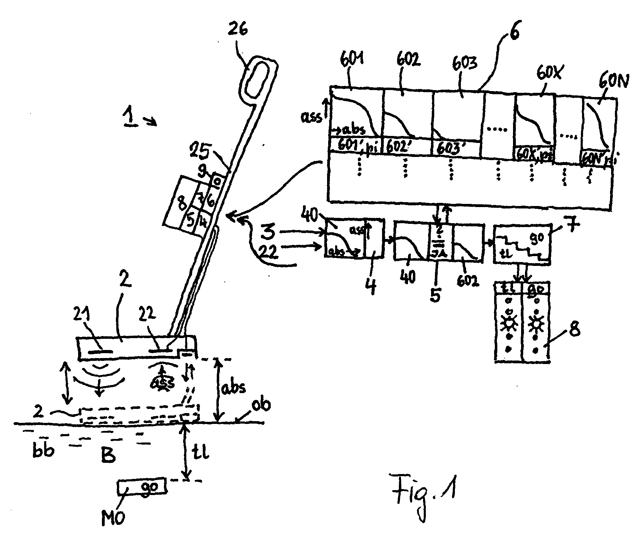

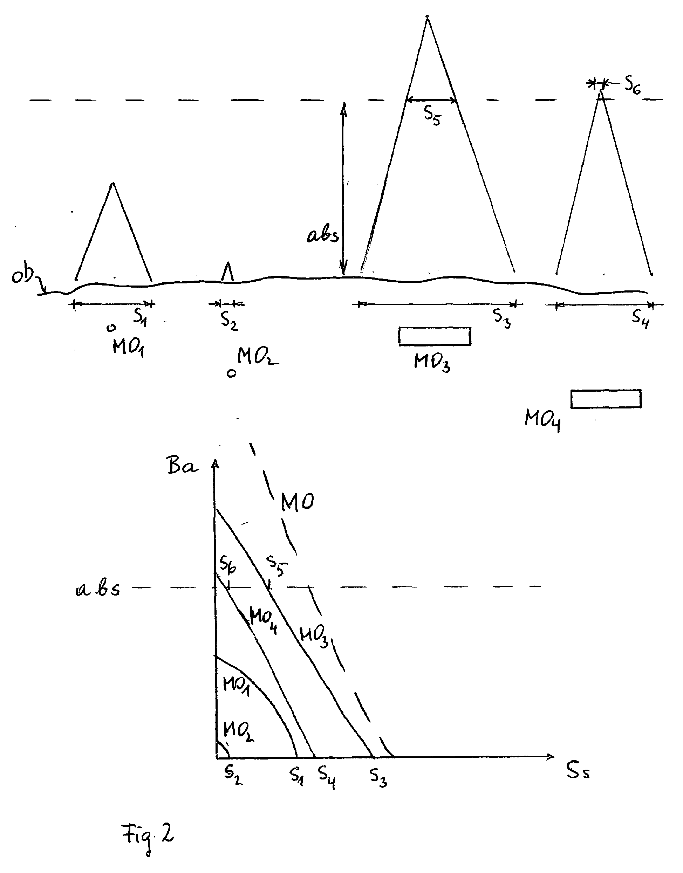

Fig. 1 zeigt schematisch eine erfindungsgemäße Einrichtung bzw. das vorgenommene Messverfahren. Fig. 2 zeigt die von in unterschiedlicher Tiefe befindlichen und unterschiedliche Größe aufweisenden Objekten erhaltenen Signale bzw. die erhaltenen Kurvenverläufe.

Es ist dort gezeigt, wie in einer Tiefe tl unterhalb der Oberfläche ob eines die Bodenbeschaffenheit bb aufweisenden Bodens B ein Metallobjekt MO mit der Objektgröße go vergraben ist.

Der eine Signal-Sendeeinheit 21 und eine Einheit 22 für den Empfang der Response- bzw. Antwort-Signale rss aufweisende Suchkopf 2 des mit einem Stiel 25 und einem Manipulationsgriff 26 ausgebildeten Metallsuchgerätes 1 wird aus einer der Bodenoberfläche ob sehr nahen Position, wie sie in der Zeichnung durch strichlierte Linie angedeutet ist, über eine Abstandsstrecke abs über den Boden B bzw. dessen Oberfläche ob angehoben, und mittels des Bodenabstands-Messsensors 3 werden laufend die Daten des sich beim Anheben bzw. Absenken des Suchkopfes 2 über die bzw. auf die Bodenoberfläche ob zu, ändernden Bodenabstands abs und die sich bei dieser Abstandsänderung laufend ändernden Response-Signalhöhen-Daten aufgenommen und in der Messdaten-Verknüpfungseinheit 4 in die bzw. den jeweils aktuelle(n) digitalisierte(n) Bodenabstands/Signalhöhen-Kurve bzw. -Algorithmus 40 mit den Koordinatenachsen abs und rss umgewandelt.

Diese aktuell ermittelte digitalisierte Kurve 40 wird in der Komparationseinheit 5 mit den in der Standardkurven- bzw. -algorithmen-Speichereinheit 6 z.B. in Form der dreidimensionalen Matrix gespeicherten digitalisierten, jeweils an - definierte unterschiedliche Größen aufweisenden und in in definierten unterschiedlichen Tiefenlagen positionierten - Metallobjekten ermittelten Standardkurven bzw. -algorithmen 601, 602, 603...60X...60N samt den diesen Kurven bzw. Algorithmen zuzuordnenden bzw. zugeordneten sonstigen Parametern 601', 602',...60X'...60N' verglichen, und es wird dort dann die bzw. der - der bzw. dem aktuell ermittelten Kurve bzw. Algorithmus 40 ähnlichste - Standard- Bodenabstands/Signalhöhenkurve bzw. -algorithmus, z.B. 602, ausgewählt, und die ihr bzw. ihm zugeordneten Tiefenlage- und Objektsgrößen-Parameter pi werden in der Quantifizierungseinheit 7 in - wenigen Tiefenlagen- und Objektsgrößen-Stufen entsprechenden - Anzeigen, wie z.B. von "tief" über "mitteltief" bis "flach" sowie "groß", "mittelgroß" oder "klein" eingeteilt, welche dann an die optische Anzeigeeinheit 8 mit die soeben genannten Tiefenlage tl- und Objektgrößen go-Stufen in Form von jeden der genannten semiquantitativen Parameter widergebenden aufleuchtenden Lämpchen od. dgl. weitergegeben werden.

Mittels einer zusätzlichen Eingabe-Einheit 9 kann durch entsprechende Eingaben eine gezielte Kompensation der die Form bzw. den Verlauf der jeweils aktuell ermittelten Bodenabstands/Signalhöhen-Kurven bzw. -Algorithmen 40 bzw. die Funktion des Standard-Algorithmus störend beeinflussenden Parameter, wie Bodenbeschaffenheits-, Metallqualitäts-Parameter u.dgl. vorgenommen werden.

In Fig. 2 oben sind Metallobjekte unterschiedlicher Größe dargestellt, die sich in unterschiedlicher Tiefe befinden. Die Objekte MO1 und MO2 sind relativ klein; die Objekte MO3 und M04 sind relativ groß. Die Objekte MO1 und MO3 befinden sich in relativ geringer Bodentiefe; die Objekte MO2 und MO4 befinden sich in relativ größerer Bodentiefe. Mit abs ist der jeweilige Bodenabstand des Suchkopfes bezeichnet. Der Gegenstand MO1 bewirkt in Bodenhöhe ob ein Signal S1, das mit zunehmendem Abstand abs abnimmt. Das Objekt M02 ergibt in Bodenhöhe ein Signal S2 geringer Stärke, das mit zunehmendem Bodenabstand abs rasch abklingt.

Der Gegenstand MO3 ergibt aufgrund der Größe und seiner geringen Tiefenlage ein beachtlich großes Signal S3, das nach oben zu relativ langsam abklingt und in einer Höhe abs noch immer nicht abgeklungen ist und dort noch immer ein Signal S5 bewirkt. Das Objekt MO4 ergibt eine Signalstärke in Bodenhöhe, die mit S4 bezeichnet ist. Das Signal des Gegenstandes M04 klingt erst oberhalb der Höhe abs ab und besitzt im Bodenabstand abs, der im vorliegenden Fall der Fig. 2 den oberen Totpunkt der Vertikalbewegung darstellt, eine Signalstärke S6.

In dem Diagramm der Fig. 2 sind praktisch zu erwartende Kurvenverläufe eingezeichnet. Die Signalverläufe in Fig. 2 oben sind rein schematisch dargestellt; eine lineare Abnahme des Signals mit zunehmendem Bodenabstand ist nicht praxisgerecht. Fig. 2 unten zeigt Abklingkurven für die Signalstärke S mit zunehmendem Bodenabstand Ba, die den praktischen Verhältnissen eher gerecht werden.

Mit MO ist eine strichlierte Kurve bezeichnet, die einem relativ großen Objekt entsprechen könnte, bei dem die Signalstärke Ss noch in relativ großen Bodenabstand Ba zu detektieren ist.

Sofern der in Fig. 2 unten im Diagramm dargestellte Verlauf in ein akustisches Anzeigesignal proportional umgesetzt wird, so kann eine geschulte Person anhand Der Tonänderung dieses akustischen Signals bereits Rückschlüsse auf die Tiefenlage und/oder Größe des Objektes vornehmen.

## Patentansprüche

1. Metall-, insbesondere Minensuchgerät für die Auffindung und Ortung von sich unter der Oberfläche eines Bodens, Untergrundes od. dgl. befindlichen Metallobjekten, insbesondere von zumindest einen Metallbauteil aufweisenden, dort vergrabenen Minen, mit Suchkopf mit Sendeeinheit für die Abstrahlung von elektrischen und/oder magnetischen Signalen bzw. Signalfolgen in den Boden, Untergrund od. dgl. und einer Metall-Detektionseinheit, welche eine Empfangseinheit für die Antwort-Signale bzw.-Signalfolgen mit mindestens einem Antwort-Signalstärke-Sensor und eine Einrichtung zur Angabe bzw. Anzeige des Vorhandenseins eines Metallobjektes, insbesondere einer Mine im Boden, Untergrund od. dgl. umfasst, **dadurch gekennzeichnet,**
- **dass** - zur Abschätzung von Tiefenlage (tl) und Größe (go) des Metallobjekts - am bzw. im, bevorzugt mit einer Sendeeinheit (21) für die Abstrahlung von Signalen mit jeweils auf gewünschte Werte einstellbaren Frequenzen ausgestatteten, Suchkopf (2) des Metall- insbesondere Minensuchgerätes (1) zusätzlich zur Metall-Detektionseinheit mit dem Antworts-Signal-Sensor (22) ein Abstandsmess-Sensor (3) für die Ermittlung des jeweils aktuellen geometrischen Abstandes (abs) des Suchkopfes (2) von der Oberfläche (ob) des - jeweils eine bestimmte Bodenbeschaffenheit (bb) aufweisenden - Bodens (B), Untergrundes od. dgl. angeordnet ist,
- **dass** der Antworts-Signal-Sensor (22) und der Abstandsmess-Sensor (3) jeweils mit. einer - mit den Sätzen von - bei Veränderung des Abstandes (abs) zwischen dem Suchkopf (2) und der Bodenoberfläche (ob), insbesondere durch Anheben oder Absenken des Suchkopfes (2) von bzw. zu derselben, vom Antwort-Signal-Sensor (22) und vom Abstandsmess-Sensor (3) jeweils aktuell ermittelten - Antwort-Signal-, insbesondere -Feldstärke- bzw. -Signalhöhe-Messdaten und Bodenabstands-Messdaten belieferbaren - Messdaten-Verknüpfungseinheit (4) zur Erstellung einer bzw. eines jeweils - die Funktionalität zwischen Antwort-Signal (ass) und Suchkopf/Bodenabstand (abs), bevorzugt in digitalisierter Form bzw. als Datenpaket, wiedergebenden - aktuellen Abstands/Signalstärkekurve bzw. -algorithmus (40) datenflussverbunden sind,
- **dass** die Messdaten-Verknüpfungseinheit (4) mit einer Kurven-Komparationseinheit (5) datenfluss- bzw. datenaustausch-verbunden ist, welche ihrerseits mit einer - eine Sammlung, Matrix bzw. Bibliothek mit einer Vielzahl von vorher mit einem Metall- bzw. Minensuchgerät gleicher Bauart unter einer Vielzahl von unterschiedlichen, jeweils bei vorgegebenen, Standard-Bedingungen bzw. -Parametern (pi), wie insbesondere Tiefenlage (tl), Größe (go) bzw. Volumens- bzw. Flächenausdehnung, Form und Lage des Metallobjektes (MO), Frequenz der von der Sendeeinheit (21) abgestrahlten Signale sowie der Bodenbeschaffenheit ermittelten, bevorzugt in digitalisierter Form bzw. als Datenpaket dargestellten, Standard-Abstands/Signalstärkekurven bzw. - algorithmen (601. 602, 603, ... 60X, ... 60N) zusammen mit den ihnen zugeordneten Informationen (601', 602', 603' ... 60X', ... 60N') bezüglich der ebengenannten Parameter (pi) gespeichert enthaltenden Standard-Kurven- bzw. Algorithmen-Speichereinheit (6) datenfluss- und datenaustausch-verbunden und von derselben mit den Standard-Abstands/Signalstärkekurven bzw. -algorithmen belieferbar und weiters mit einer Software für die Auswahl der bzw. des - der bzw. dem jeweils am aktuell georteten Metallobjekt (MO) aktuell ermittelten Abstands/Signalstärkekurve bzw. - algorithmus (40) ähnlichsten - in der Standardkurven- bzw. -algorithmen-Speichereinheit (6) gespeicherten Standard-Abstands/Signalstärkekurve bzw. - algorithmus (60X) ausgestattet ist, und
- **dass** von der genannten Kurven- bzw. Algorithmen-Komparationseinheit (5) aus die der bzw. dem jeweils aus der Standardkurven-Speichereinheit (6) ausgewählten, ähnlichsten Standard-Abstands/ Signalstärkekurve bzw. -algorithmus (60X) zugeordneten Parameter-Informationen (pi), insbesondere bezüglich Größe (go) und Tiefenlage (tl) des Metallobjekts (MO), über eine dieselbe in qualitative bzw. semiquantitative Objekts-Tiefenlage- und Objektsgröße-Daten umwandelnde Kategorisier-Einheit (7) an eine, bevorzugt optische, zumindest die der Tiefenlage (tl) und die Größe, (go) des jeweils aktuell georteten Metallobjektes (MO) entsprechenden Werte in wenigen diskreten Messwert-Stufen angebende Anzeige-Einheit (8) an einer für den Benutzer gut einsehbaren Stelle am Metall-, insbesondere Minensuchgerät (1) abgebbar sind.

2. Metallsuchgerät nach Anspruch 1, **dadurch gekennzeichnet, dass** es zusätzlich zumindest eine mit der Kurven-Speichereinheit (6) datenflussverbundene Eingabe-Einheit (9) für die Einstellung einer für eine jeweils aktuelle Ortung eines Metallobjektes (MO) vorgesehenen Sendesignalfrequenz und/oder eines die aktuelle Bodenbeschaffenheit repräsentierenden Parameters bzw. Korrektur-oder Kompensationsfaktors und/oder des dem vermuteten Metall-Werkstoff des aktuell zu ortenden Metallobjektes (MO) entsprechenden ferromagnetischen bzw. Eisenäquivalents-Parameters bzw. -Korrekturfaktors aufweist.

3. Metallsuchgerät nach Anspruch 1 oder 2, **dadurch gekennzeichnet, dass** es als Abstandsmess-Sensor (3) eine Ultraschall-Echolot-, Radar- oder Laserlicht-Abstands-Messeinrichtung und/oder eine optische Entfernungs-Messeinrichtung aufweist.

4. Metallsuchgerät nach einem der Ansprüche 1 bis 3,
**dadurch gekennzeichnet,**
**dass** es eine optische Anzeigeeinheit (8) mit zwei Serien (80) von jeweils in geringer Anzahl, insbesondere drei oder fünf tageslicht-sichtbaren Lämpchen, Leuchtdioden (81) od. dgl., aufweist, und zwar jeweils mit einer derartigen Serie für die semiquantitative - in Stufen erfolgende Angabe bzw. Anzeige der Größe (go) des georteten Metallobjekts (MO), wie insbesondere mit den Anzeigestufen:
"Groß"..."Mittelgroß"...Klein"; "5, (4), 3, (2), 1" od. dgl.
und mit einer Serie für die semiquantitative - in Stufen erfolgende - Angabe bzw. Anzeige der Tiefenlage (tl) des Metallobjekts (110), wie insbesondere mit den Anzeigestufen:
"Tief"..."Mitteltief"..."Seicht"; "5, 4, 3, 2, 1" od. dgl.
aufweist.

5. Metallsuchgerät nach einem der Ansprüche 1 bis 4,
**dadurch gekennzeichnet,**
**dass** es alternativ oder zusätzlich zur optischen Anzeige-Einheit (8) für die Tiefenlage (tl) und Objektgröße (go) des Metallobjekts (MO) eine akustische Anzeigeeinheit, vorzugsweise mit Sprachausgabe, insbesondere in zu den im Anspruch 4 genannten semiquantitativen wenigen Anzeigestufen analogen leicht in ihrer Frequenz hörunterscheidbaren oder in verbaler Form ausgegebenen Anzeigestufen umfasst.

6. Verfahren zur Auffindung und Ortung von sich unter der Oberfläche eines Bodens, Untergrundes od. dgl. befindlichen Metallobjekten, insbesondere von zumindest einen Metallbauteil aufweisenden, dort vergrabenen Minen, mit einem Metall-, insbesondere Minensuchgerät mit Suchkopf mit mindestens einer Sendeeinheit für die Abstrahlung von elektrischen und/oder magnetischen Signalen bzw. Signalfolgen in den Boden, Untergrund od. dgl. und einer Metall-Detektionseinheit, welche mindestens eine Empfangseinheit für die Antwort-Signale bzw. -Signalfolgen mit mindestens einem Feldstärke-Sensor und einer Einrichtung zur Angabe bzw. Anzeige des Vorhandenseins eines Metallobjektes, insbesondere einer Mine im Boden, Untergrund od. dgl. umfasst, sowie zusätzlich mit einem Abstandsmess-Sensor nach einem der Ansprüche 1 bis 5,
**dadurch gekennzeichnet,**
- **dass** in einer 1. Stufe - einer Reihe von verschiedenen diskreten Messbedingungs-Parametern (pi), entsprechend - in unterschiedlichen diskreten Tiefenlagen (tl) unterhalb der Boden-Oberfläche (ob) Metallobjekte (MO) diskreter unterschiedlicher Größe (go) Gestalt bzw. Form, Raumlage aus unterschiedlichen Metallen od. dgl. in Untergründen bzw. Böden (B) unterschiedlicher Beschaffenheit (bb) positioniert werden,
- **dass** in einer 2. Stufe mittels des Metallsuchgerätes (1) - jeweils nach Wahl und Einstellung eines der genannten Parameter (pi) sowie gegebenenfalls eines gerätespezifischen Parameters, insbesondere der Sendesignal-Frequenz, des Gerätes (1) auf vorbestimmte diskrete unterschiedliche Werte - bei gleichzeitigem Konstanthalten aller übrigen Parameter - mittels des mit dem Bodenabstands-Messsensor (3) ausgestatteten Metallsuchgerätes (1) unter, bevorzugt kontinuierlicher, Veränderung des Abstandes (abs) von dessen Suchkopf (2) von der Boden-Oberfläche (bo), insbesondere durch Anheben des Suchkopfes (2) von derselben, mittels der Messdaten-Verknüpfungseinheit (4) des Metallsuchgerätes (1) eine Schar von für einen - bei Konstanthaltung aller übrigen Parameter - jeweils auf sich ändernde, diskrete Werte, eingestellten Parameter geltenden Standard-Abstands/Signalstärkekurven- bzw. -algorithmen (601, 602, ... 60X...60N) erstellt und in der Standardkurven- bzw. -algorithmen-Speichereinheit (6) abgelegt und gespeichert wird, und dieser Vorgang in analoger Weise unter entsprechendem Wechsel der jeweils diskret zu ändernden Parameter (pi) und der jeweils gleichzeitig konstant zu haltenden übrigen Parameter bis zum Erhalt einer Standard-Bodenabstands/Signalstärkenkurven- bzw. -algorithmen-Bibliothek od. dgl. fortgesetzt wird,
- **dass** in einer 3. Stufe mittels des gleichen Metallsuchgerätes (1) bzw. eines solchen gleicher Bauart nach Ortung eines hinsichtlich der obengenannten Parameter (pi), insbesondere Objektgröße (go) und Tiefenlage (tl), unbekannten Metallobjekts (MO) der Abstand (abs) des Suchkopfes (2) von der Boden-Oberfläche (BO), insbesondere durch Anheben desselben (2) von derselben, verändert wird und dass aus den aktuellen Bodenabstands- und Antwort-Signalstärke-Messdaten mittels der Messdaten-Verknüpfungseinheit (4) eine bzw. ein aktuelle(r) Abstands/Signalstärkekurve- bzw. - algorithmus (40) erstellt wird, welche(r) in der Komparationseinheit (5) mit den aus der Standardkurven- bzw. -algorithmen-Speichereinheit (6) abgerufenen Standard-Abstands/Signalstärkekurven bzw. -algorithmen (601, 602,... 60X ... 60N) verglichen wird, wobei die bzw. der - der bzw. dem jeweils aktuell ermittelten Abstands/Signalstärkekurve- bzw. -algorithmus (40) in Koordinatenlage und Verlauf ähnlichste - Standard-Abstands/Signalstärkekurve- bzw. -algorithmus (60X) ausgewählt wird und deren bzw. dessen Tiefenlage- und der Objektgrößen-Parameter über die Kategorisiereinheit (7) an die diese Parameter in wenige überschaubare Anzeigestufen übersetzende, vorzugsweise optische, Objektgrößen- und Tiefenlage-Anzeigeeinheit (8) weitergegeben werden, von wo dieselben
- in einer 4. Stufe von der das Metallsuchgerät bedienenden Person abgelesen werden, wonach und auf Grund der semiquantitativ angezeigten Objektgröße (go) und Tiefenlage (tl) schließlich das Metallobjekt (MO) geborgen wird.
